# EUROPÄISCHE PATENTSCHRIFT

(11) **EP 4 261 046 B1**
(45) Veröffentlichungstag und Bekanntmachung des Hinweises auf die Patenterteilung: **18.09.2024**
(21) Anmeldenummer: 22167924.4
(22) Anmeldetag: 12.04.2022
(51) Int. Cl.: B44C 1/24, B44C 5/04, B32B 38/06, B32B 38/00

(54) **VERFAHREN ZUM HERSTELLEN EINES DEKORPANEELS MIT VERBESSERTER SYNCHRONITÄT VON DEKOR UND STRUKTUR**
METHOD OF MANUFACTURING A DECORATIVE PANEL WITH IMPROVED SYNCHRONISM OF DECORATION AND STRUCTURE
PROCÉDÉ DE FABRICATION D'UN PANNEAU DÉCORATIF À SYNCHRONISATION AMÉLIORÉE DU DÉCOR ET DE LA STRUCTURE

(43) Veröffentlichungstag der Anmeldung: 18.10.2023
(73) Patentinhaber: Akzenta Paneele + Profile GmbH, 56759 Kaisersesch (DE)
(72) Erfinder: Hannig, Hans-Jürgen, 51427 Bergisch Gladbach (DE); Wendel, Sebastian, 54634 Bitburg (DE)
(74) Vertreter: Michalski Hüttermann & Partner Patentanwälte mbB

(56) Entgegenhaltungen:
- EP-A1- 3 257 654
- WO-A1-2016/050696
- DE-A1- 102010 025 159
- US-A1- 2013 295 352

## Beschreibung

Die vorliegende Erfindung betrifft ein Verfahren zum Herstellen eines strukturierten Dekorpaneels, insbesondere durch eine zu einem Dekor synchrone Strukturierung. Die vorliegende Erfindung betrifft ferner ein System, mit welcher ein derartiges Verfahren ausgeführt werden kann.

Zum Schutz einer auf einen Träger aufgebrachten Dekorschicht sind in der Regel Verschleiß- oder Deckschichten oberhalb der Dekorschicht aufgebracht. Vielfach ist es vorgesehen, dass in solche Verschleiß- oder Deckschichten eine, eine Dekorvorlage imitierende, Oberflächenstrukturierung eingebracht ist, so dass die Oberfläche des Dekorpaneels eine haptisch wahrnehmbare Struktur aufweist, welche in ihrer Form und ihrem Muster dem aufgebrachten Dekor angepasst ist, um so eine möglichst originalgetreue Nachbildung eines natürlichen Werkstoffes auch hinsichtlich der Haptik zu erhalten.

Beispielsweise wird die Struktur dabei in bekannter Weise durch Prägewerkzeuge eingebracht. Ein derartiges Verfahren, bei dem eine Struktur durch Einpressen in eine insbesondere glatte Oberfläche erfolgt, wird im Sinne der vorliegenden Erfindung als Negativstrukturierung bezeichnet. WO 2016/050696 offenbart ein Verfahren zum Herstellen eines Dekorpaneels mit dekorsynchroner Prägung, wobei ein Träger mit einem Dekor versehen wird, eine Folie auf den dekorierten Träger aufgebracht wird, und der Schichtverbund geprägt wird. Die Synchronität zwischen Struktur und Dekor wird erfasst, und sodann beim Bedrucken der Dekor mittels eines Digitaldruckers berücksichtigt.

Verbesserungspotential bietet sich bei derartigen Verfahren, wie auch bei anderen Strukturierungen, beispielsweise bei strukturgebenden Lackauftragverfahren, bei der Erzeugung der Synchronität von Struktur und Dekor. Bei Negativstrukturierungen etwa ist es möglich, dass die genaue Ausrichtung der Prägewerkzeuge relativ zum Dekor Probleme bereiten kann. Die Herstellung von strukturierten Oberflächen zum Verschleißschutz kann deswegen unter Umständen noch Verbesserungspotential bieten.

Es ist daher die Aufgabe der vorliegenden Erfindung, verbesserte Mittel für strukturierte Oberflächen etwa zum Verschleißschutz bereitzustellen, welche die aus dem Stand der Technik bekannten Probleme zumindest teilweise überwinden.

Gelöst wird diese Aufgabe durch ein Verfahren gemäß Anspruch 1 sowie ferner durch ein System gemäß Anspruch 15. Bevorzugte Ausgestaltungen der Erfindung sind in den Unteransprüchen oder in der Beschreibung angegeben.

Beschrieben wird ein Verfahren zum Herstellen eines strukturierten Dekorpaneels, aufweisend die Verfahrensschritte:
a) Bereitstellen einer zu strukturierenden Folie;
b) Bereitstellen eines Prägemittels zum Strukturieren der Folie;
c) Strukturieren der Folie mit dem Prägemittel unter Ausbildung wenigstens eines Strukturbereichs auf der Folie;
d) Ermitteln wenigstens eines Maßes wenigstens eines Strukturbereichs nach Verfahrensschritt c);
e) Bereitstellen eines Trägers,
f) Aufbringen eines Dekors auf den Träger, wobei
g) bei dem Aufbringen eines Dekors auf den Träger das in Verfahrensschritt c) ermittelte wenigstens eine Maß des Strukturbereichs berücksichtigt wird; und
h) Aufbringen der strukturierten Folie auf den dekorierten Träger derart, dass der wenigstens eine Strukturbereich in Synchronität mit dem Dekor vorliegt.

Durch ein derartiges Verfahren kann im Herstellungsprozess eines Dekorpaneels ein verbessertes Aufbringen einer Folie auf einen Träger ermöglicht werden. Insbesondere kann eine verbesserte Synchronität zwischen optischem Dekor und haptischer Struktur ermöglicht werden.

Unter dem Begriff Dekorpaneel sind im Sinne der Erfindung insbesondere Wand-, Decken, Tür- oder Bodenpaneele zu verstehen, welche ein auf eine Trägerplatte aufgebrachtes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau verwendet. Eine der häufigsten Einsatzbereiche von Dekorpaneelen ist deren Nutzung als Fußbodenbelag, zum Verkleiden von Decken, Wänden oder Türen. Die Dekorpaneele weisen dabei vielfach ein Dekor und eine Oberflächenstrukturierung auf, welche einen Naturwerkstoff imitieren soll.

Um das Dekorpaneel herzustellen umfasst das Verfahren zunächst gemäß Verfahrensschritt a) das Bereitstellen einer zu strukturierenden Folie. Die Folie soll somit mit einer haptisch wahrnehmbaren Struktur versehen werden, welche in dem erzeugten Dekorpaneel als sogenannte Synchronpore fungieren soll. Ferner kann es bevorzugt sein, dass die Folie das auf dem Träger aufgebrachte Dekor abdeckt und somit eine Schutz- und/oder Verschleißschicht darstellt. Beispielsweise kann die Folie die äußerste Schicht des hergestellten Dekorpaneels ausbilden.

In der Ausgestaltung der Folie als Schutzschicht beziehungsweise Verschleißschicht kann die Folie das Dekor nach oben abdecken, um Dekor und Träger so vor äußeren Einflüssen zu schützen.

Diesbezüglich kann es besonders bevorzugt vorgesehen sein, dass die Folie Hartstoffe aufweist, vorzugsweise in einer Menge zwischen ≥ 5 Gew.-% und ≤ 40% Gew.-%, wobei die Hartstoffe vorzugsweise einen mittleren Korndurchmesser zwischen 10 µm und 250 µm aufweisen. Beispiele umfassen Titannitrid, Titancarbid, Siliciumnitrid, Siliciumcarbid, Borcarbid, Wolframcarbid, Tantalcarbid, Aluminiumoxid (Korund), Zirconiumoxid, Zirconiumnitrid oder Mischungen dieser.

Die Ausgestaltung der Folie ist nicht grundsätzlich beschränkt und insbesondere abhängig von der späteren Verwendung der Folie beziehungsweise des Verbunds aus Folie und Träger. Bevorzugt kann die Folie aus einem Kunststoff, bevorzugt einem thermoplastischen Kunststoff, ausgebildet sein.

Gemäß Verfahrensschritt b) umfasst das Verfahren weiterhin das Bereitstellen eines Prägemittels zum Strukturieren der Folie. Das Prägemittel dient wie vorstehend angedeutet dazu, in die Folie eine Struktur einzubringen beziehungsweise genauer einzupressen. Hierzu ist das Prägemittel seinerseits mit einer Struktur versehen, welche dem Negativ der einzupressenden beziehungsweise der auszubildenden Struktur entspricht. Die Struktur kann etwa durch eine Gravur in das Prägemittel eingebracht werden und kann etwa basieren auf Strukturdaten, die aus einer bestehenden Digitaldruckdatei extrahiert werden. Zweckmäßigerweise kann die Digitaldruckdatei für das Erzeugen des Dekors verwendet werden, wie dies nachfolgend in größerem Detail beschrieben ist. Die Digitaldruck-Daten können dann in Strukturdaten des Prägemittels übersetzt werden. Beispielsweise dienen die Strukturdaten für eine Gravur, wie etwa Lasergravur. Alternativ können die Strukturdaten auch durch ein dreidimensionales Scannen einer Strukturvorlage, wie etwa eines strukturierten Echtholzes, erzeugt werden.

Hinsichtlich des Prägemittels kann es von Vorteil sein, dass dieses eine Prägewalze umfasst oder in anderen Worten, dass als Prägemittel eine Prägewalze verwendet wird. Derartige Prägemittel zeichnen sich dadurch aus, dass diese problemlos herstellbar sind und ferner sicher und verlässlich im Betrieb sind. Es ist jedoch ebenfalls von der vorliegenden Erfindung umfasst, dass das Prägemittel etwa ein umlaufendes Band, also ein Prägeband, oder auch ein Pressblech ist. Durch ein Prägeband oder ein Pressblech beziehungsweise Prägeblech kann die Einwirkdauer des Prägemittels auf die Folie verlängert werden, was hinsichtlich der Strukturgebung ebenfalls von Vorteil sein kann. Beispielsweise kann mit geringerem Druck gearbeitet werden.

Entsprechend dient das Prägemittel einer Negativstrukturierung, mittels welcher gemäß Verfahrensschritt c) das Strukturieren der Folie mit dem Prägemittel unter Ausbildung wenigstens eines Strukturbereichs auf der Folie erfolgen kann. Somit weist die Folie nach dem Strukturieren durch das Prägemittel einen oder mehrere Strukturbereiche auf, welche der Struktur des Dekorpaneels entsprechen sollen und welche entsprechend an die Dekordaten des hergestellten Dekorpaneels angepasst sind. Der oder die Strukturbereiche können der Oberfläche des herzustellenden Dekorpaneels entsprechen, welche mit einer Struktur versehen werden soll. Beispielsweise können der oder die Strukturbereiche den Dekorbereichen der herzustellenden Dekorpaneele entsprechen.

Gemäß Verfahrensschritt d) erfolgt weiterhin das Ermitteln wenigstens eines Maßes wenigstens eines Strukturbereichs nach Verfahrensschritt c). Gemäß diesem Verfahrensschritt wird somit wenigstens ein Maß des oder der Strukturbereiche ermittelt, nachdem die Folie strukturiert wurde. Dieser Verfahrensschritt erfolgt beispielsweise unter Umgebungsbedingungen, also insbesondere bei Umgebungstemperatur oder zumindest nach einem gewissen Abkühlen der Folie nach dem Strukturieren. Beispielsweise kann dieser Verfahrensschritt bei Raumtemperatur erfolgen, also insbesondere bei 22°C oder in einem Bereich von 22°C mit einer maximalen Abweichung von +/- 15°C. Grundsätzlich kann es jedoch ausreichend sein, dass die Bestimmung des wenigstens einen Maßes nach dem Strukturieren erfolgt.

Das Ermitteln wenigstens eines Maßes des Strukturbereichs kann in für den Fachmann an sich bekannter Weise erfolgen in Abhängigkeit des konkret gewählten Maßes. Beispielsweise kann eine zweidimensionale Ausdehnung, also etwa die Länge und/oder die Breite, ermittelt werden durch kamerabasierte Verfahren oder durch scannerbasierte Verfahren. Grundsätzlich kann eine optische Abtastung des Strukturbereichs von Vorteil sein. Unter einem Ermitteln des Maßes wird in für den Fachmann verständlicher Weise gleichermaßen das Ermitteln einer Maßänderung während der Strukturierung oder in anderen Worten durch die Strukturierung verstanden, da dies unmittelbare Rückschlüsse auf das Maß zulässt.

Gemäß Verfahrensschritt e) erfolgt weiterhin das Bereitstellen eines Trägers und damit insbesondere eines Trägers, welcher mit der Folie versehen werden soll beziehungsweise auf welchen die Folie aufgebracht werden soll.

Die Art des Trägers ist nicht grundsätzlich beschränkt, insoweit der Träger als Unterlage beziehungsweise Substrat für die Folie dienen kann. In anderen Worten kann grundsätzlich unter einem Träger jegliche Struktur verstanden werden, welche als Untergrund für eine aufzukaschierende Folie dient. Für den Fall der Herstellung eines Dekorpaneels kann der Träger jedoch ein hierfür geeigneter Träger sein. Unter einem Träger kann dann insbesondere eine in einem fertig gestellten Paneel als Kern beziehungsweise als Basislage dienende Lage verstanden werden, die insbesondere einen Naturstoff, wie etwa einen Holzwerkstoff, einen Faserwerkstoff oder einen Werkstoff umfassend einen Kunststoff aufweisen kann. Beispielsweise kann der Träger einem Paneel eine geeignete Stabilität verleihen oder zu dieser beitragen. Der Träger kann dabei insbesondere ein bahnartiger Träger oder plattenförmiger Träger sein. Beispielsweise kann ein derartiger Träger aus Kunststoff ausgebildet sein, wobei einer derartiger Träger aus reinem Kunststoff oder einem Kunststoffwerkstoff ausgebildet sein kann. Ein Kunststoffwerkstoff soll dabei ein Material sein, das neben dem reinen Kunststoff noch weitere Bestandteile, insbesondere Füllstoffe, wie etwa mineralische beziehungsweise anorganische Bestandteile, aufweisen kann.

Weiterhin erfolgt gemäß Verfahrensschritt f) das Aufbringen eines Dekors auf den Träger. Dabei ist es im Sinne der vorliegenden Erfindung besonders vorteilhaft, dass das Dekor auf den Träger aufgedruckt wird, insbesondere mittels eines Direktdruckverfahrens.

Unter dem Begriff "Direktdruck" wird im Sinne der Erfindung das Aufbringen eines Dekors direkt auf den Träger eines Paneels oder auf eine auf dem Träger aufgebrachte nicht oder teilweise bedruckte Faserwerkstoffschicht verstanden. Entgegen der konventionellen Verfahren, bei welchen auf einen Träger eine zuvor mit einem gewünschten Dekor bedruckte Dekorschicht aufgebracht wird, erfolgt beim Direktdruck das Aufdrucken des Dekors unmittelbar im Zuge der Paneel-Herstellung. Dabei können unterschiedliche Drucktechniken, wie beispielsweise Flexo-Druck, Offset-Druck oder Siebdruck zum Einsatz gelangen. Insbesondere können dabei Digitaldrucktechniken, wie beispielsweise Inkjet-Verfahren oder Laserdruck-Verfahren eingesetzt werden.

Um ein besonders exaktes Druckbild mit einer besonders hohen Genauigkeit des Dekors zu ermöglichen kann bevorzugt der Träger vor der Zuführung zum Druckwerk und/oder während des Druckvorgangs im Druckwerk mit Mitteln zur Veränderung der elektrostatischen Aufladung des Trägers behandelt werden, indem der Träger zunächst elektrostatisch entladen wird und dem Träger anschließend gegebenenfalls ein definierter Ladungsbetrag zugeführt wird.

Erfindungsgemäß ist es ferner vorgesehen, dass gemäß Verfahrensschritt g) bei dem Aufbringen eines Dekors auf den Träger das in Verfahrensschritt c) ermittelte wenigstens eine Maß des Strukturbereichs berücksichtigt wird.

Entsprechend wird das Dekor nicht zwingend strikt nach vorgegebenen und von der Größe der Strukturbereiche unabhängigen Daten aufgebracht, insbesondere aufgedruckt, sondern bei dem Aufbringen des Dekors, insbesondere beim Drucken des Dekors, wird das wenigstens eine Maß des Strukturbereichs oder der Strukturbereiche berücksichtigt. Insbesondere wird das Maß des Dekors, dessen Maß des Strukturbereichs berücksichtigt wird, an das entsprechend Maß des Strukturbereichs angepasst. Beispielhaft kann die Länge und/oder die Breite des Dekors an die ermittelte Länge und/oder Breite des Strukturbereichs angepasst und das Dekor entsprechend gedruckt werden. Es findet somit vor oder während des Herstellungsverfahrens eine Anpassung der Druckdaten statt, so dass die ursprünglichen Druckdaten bei exakter Einhaltung des oder der Maße des Strukturbereichs verwendet oder entsprechend angepasst werden können.

Für den Fall, dass das Maß etwa die Länge und/oder Breite des Strukturbereichs umfasst wie nachfolgend beschrieben, kann eine Anpassung entsprechend erfolgen, indem die Länge und/oder Breite des Dekors entsprechend angepasst wird. Hierzu können gegebenenfalls zuvor ermittelte und hinterlegte Dekordaten verwendet werden, welche bestimmten Parametern des Maßes zugeordnet sind. In anderen Worten können, wenn das Maß einen bestimmten Wert annimmt, zuvor den entsprechenden Maßen zugeordnete Dekordaten verwendet werden, um das Dekor zu drucken. Alternativ kann anhand des ermittelten Maßes oder anhand der ermittelten Maße unmittelbar eine rechnerische Korrektur der Dekordaten erfolgen, indem das Dekor, wie etwa seine Ausdehnung bzw. Größe, während des Prozesses unter Erstellung angepasster und dann zu verwendender Dekordaten an das Maß oder die Maße angepasst wird.

Gemäß Verfahrensschritt h) erfolgt weiterhin das Aufbringen der strukturierten Folie auf den dekorierten Träger derart, dass der wenigstens eine Strukturbereich in Synchronität mit dem Dekor vorliegt. Somit kann beispielsweise der gesamte Träger, etwa eine gesamte Oberfläche des Trägers, mit der Folie versehen werden, oder kann der Träger nur teilweise mit der Folie versehen werden.

Dies kann beispielsweise realisiert werden, indem die Folie zu dem Träger geführt wird und anschließend, beispielsweise mittels einer Walze, etwa unter Verwendung von zu der Raumtemperatur (22°C) erhöhter Temperatur und zu Umgebungsdruck (1bar) erhöhtem Druck auf den Träger gepresst wird. Dieser Verfahrensschritt kann auch als Kaschieren beschrieben werden und kann grundsätzlich in wählbarer Form ausführbar sein. Beispielsweise soll im Rahmen der Erfindung ein Nasskaschieren oder ein Trockenkaschieren umfasst sein, bei dem das Kaschieren mittels eines nassen oder trockenen Kaschiermittels ausgeführt wird.

Sind Träger und Folie aus unterschiedlichen Polymeren, kann bevorzugt mit Klebstoff und/oder Verbindungschicht oder Hotmelt als Kaschiermittel gearbeitet werden. Coextrudierte thermoplastische Funktionsschichten, die fest mit Träger oder Folie bei der Herstellung verbunden werden, sind als Verbindungsschicht auch denkbar, wie etwa EVA (Ethylen-Vinylacetat-Copolymer) oder ein gepfropftes MAH (Maleinsäureanhydridaufgepropftes Polymer). Die Kaschierparameter werden dann auf diese Funktionsschichten zwischen Folie und Träger eingestellt. Beispielhafte Parameter umfassen dann etwa für EVA eine Temperatur von 70°C bis 100 °C, abhängig vom Vinyl-Acetatanteil im EVA, und einen Druck von 1 bis 10 bar. Bei einem Kaschieren sollte jedoch darauf geachtet werden, dass Temperatur und Druck ausreichend niedrig eingestellt werden, um die zuvor eingeprägte Struktur nicht zu beschädigen, was beispielsweise unter Verwendung von Kaschiermitteln problemlos möglich ist.

Nach diesem Schritt kann die Folie fest auf dem Träger fixiert sein. Gegebenenfalls kann eine Nachbehandlung, wie etwa eine Trocknung oder ein Härten des Kaschiermittels oder auch der Folie, erfolgen, wenn dies notwendig ist.

Bei dem beschriebenen Verfahren kann es ferner vorgesehen sein, dass die Folie vor dem Aufbringen auf den Träger elektrostatisch beladen wird und dass der Träger vor dem Aufbringen der Folie auf den Träger elektrostatisch beladen wird. Eine elektrostatische Beladung kann dabei grundsätzlich erfolgen, wie es aus dem Stand der Technik auf anderen Gebieten bekannt, etwa mittels Ionisierungseinrichtungen. Grundsätzlich ist es bevorzugt, dass die elektrostatische Beladung des Trägers und der Folie derart ausgeführt wird, dass die Folie und der Träger entgegengesetzt elektrostatisch beladen werden. Beispielsweise kann der Träger negativ geladen werden und kann die Folie positiv geladen werden, oder umgekehrt kann der Träger positiv geladen werden und kann die Folie negativ geladen werden.

Durch diesen Verfahrensschritt kann es erlaubt werden, dass zwischen dem Träger und der Folie eine elektrostatische Anziehung vorliegt. Dies erlaubt ein besonders inniges Verbinden beispielsweise dann, wenn der Träger in einer großen Fläche mit der Folie versehen wird.

Es kann ferner bevorzugt sein, dass wenigstens einer von dem Träger und der Folie vor der elektrostatischen Beladung elektrostatisch entladen wird. In dieser Ausgestaltung können die vorbeschriebenen Vorteile besonders sicher und definiert erfolgen.

Gemäß dem erfindungsgemäßen Verfahren und dabei insbesondere dadurch, dass gemäß Verfahrensschritt g) bei dem Aufbringen eines Dekors auf den Träger das in Verfahrensschritt c) ermittelte wenigstens eine Maß des Strukturbereichs berücksichtigt wird, kann es ermöglicht werden, dass eine besonders exakte Synchronität der haptischen Struktur mit dem Dekor erfolgt. Denn das Ausbilden der Struktur und des Dekors erfolgt nicht ausschließlich nach vorgegebenen Daten, sondern eine Anpassung von Dekor und Struktur erfolgt basierend auf den wirklichen Ausmaßen der Struktur. Dabei kann insbesondere berücksichtigt werden, dass bei dem Einbringen der Struktur, insbesondere bei einem Einpressen der Struktur unter Verwendung von Druck und Hitze, die Folie sich in ihren Dimensionen verändern kann, so dass die schließlich erzeugten Strukturbereiche nicht zwingend dem Bereich entsprechen muss, welcher ursprünglich für die Strukturierung vorgesehen ist.

Die Dimensionsänderung beziehungsweise die Maßänderung kann abhängig sein von dem Material der Folie, der Foliendicke, der konkret eingebrachten Struktur als auch von den Prägebedingungen, insbesondere der verwendeten Temperatur beim Prägen. Weitere Einflussfaktoren umfassen etwa die Prägegeschwindigkeit und das Zugverhalten der Folie in dem Prägeverhalten, was insbesondere ein Materialparameter ist. Entsprechend ist es nicht immer möglich, die durch die Strukturierung hervorgerufene Maßänderung der Folie exakt vorherzusagen.

Entsprechend können durch das erfindungsgemäße Verfahren unabhängig von den verwendeten Bedingungen, von der spezifischen Ausgestaltung der Folie und von der eingepressten Struktur besonders hohe Anforderungen an die Synchronität von Struktur und Dekor möglich werden und dadurch eine besonders hoch qualitatives Dekorpaneel erzeugt werden.

Wenn die Folie vor dem Prägen mit einem Lack, etwa mit UV-härtbarem Acryllack, versehen wird, der dann schon die Endoberfläche darstellt, ergibt sich der weitere Vorteil, dass die der Endlackierung von tiefen Strukturen weniger Problematisch ist, beispielsweise hinsichtlich des Auftretens von Glanzpunkten.

Bevorzugt kann das wenigstens eine Maß die Länge des Strukturbereichs umfassen. Alternativ oder zusätzlich kann das wenigstens eine Maß die Breite des Strukturbereichs umfassen. Insbesondere die Länge und/oder die Breite des Strukturbereichs oder der Strukturbereiche können verlässlich eine Maßänderung angeben, die als Ganzes repräsentativ ist für die Maßänderung auch in kleinen Bereichen der Folie, da eine Maßänderung meist gleichmäßig durch den Strukturbereich verläuft. Somit kann durch eine Anpassung der Gesamtlänge beziehungsweise der Gesamtbreite des Dekors eine Anpassung auch in den einzelnen Strukturelementen korrekt sein. Somit kann diese Ausgestaltung auf einfache Weise eine Anpassung des Dekors an die Struktur ermöglichen.

Darüber hinaus sind Länge und/oder Breite der Strukturbereiche etwa durch optisches Abtasten problemlos ermittelbar, wodurch das Verfahren verlässlich umsetzbar ist.

Hinsichtlich der Folie kann es bevorzugt sein, dass diese aus Kunststoff ausgebildet ist, beispielsweise daraus besteht oder auch noch weitere Bestandteile aufweist. Genauer kann die Folie eine Acrylat-basierte Kunststoffzusammensetzung, insbesondere eine polyurethanmodifizierte Acrylat-Kunststoffzusammensetzung, aufweisen, wobei die Folie die Kunststoffzusammensetzung in einer zumindest teilweise, beispielsweise vollständig, gehärteten Form aufweisen kann, so dass sie für ein Kaschieren transportierbar und entsprechend behandelbar ist. Ein gegebenenfalls notwendiges Endhärten der Folie kann gegebenenfalls in einem weiteren Schritt im Anschluss an die Kaschierung erfolgen. Dies kann beispielsweise durch energiereiche und kurzwellige UV-Strahlung erfolgen und führt neben der radikalischen Polymerisation der Acrylatgruppen zu zusätzlichen Quervernetzungen der Monomere. Dadurch erhöht sich die Oberflächenhärte beträchtlich. Auch sind wasserbasierte Systeme möglich.

Dadurch wird vorteilhafter Weise erreicht, dass die Folie insgesamt flexibel ist und gleichzeitig für vielerlei Anwendungen, beispielsweise als Schutzschicht eines Dekorpaneels, besonders gute Schutzeigenschaften, wie Stabilität, Kratzfestigkeit, Hitzebeständigkeit, Wasserbeständigkeit und dergleichen, aufweist.

Bevorzugt kann die Kunststoffzusammensetzung der Folie ein Dipropylenglykoldiacrylat, bevorzugt in einer Menge von > 0 bis ≤ 15 Gew.-% bezogen auf die Kunststoffzusammensetzung, und ein Reaktionsprodukt aus Pentaerythrit, Epichlorhydrin und Acrylsäure, bevorzugt in einer Menge von ≥ 2 bis ≤ 15 Gew.-% bezogen auf die Kunststoffzusammensetzung, aufweisen.

Weiterhin kann die Folie jedoch auch aus weiteren, insbesondere thermoplastischen, Kunststoffen aufgebaut sein, wie etwa aus Polyethylenterephthalat (PET) oder Polypropylen.

Es kann weiterhin bevorzugt sein, dass das Prägemittel in Längsrichtung benachbart zu wenigstens einem strukturprägenden Bereich einen Neutralbereich aufweist. Unter einem Neutralbereich ist insbesondere ein solcher Bereich zu verstehen, der nicht mit einer Struktur versehen ist, die an ein Dekor angepasst ist. Somit dient der Neutralbereich nicht dazu, eine Synchronpore herzustellen.

Durch das Vorsehen eines derartigen Neutralbereichs kann es erreicht werden, dass der Abstand zwischen zwei Strukturbereichen der Folie insbesondere in Längsrichtung der Folie an den Abstand zweier Bereiche der Träger bei einem Aufkaschieren der Folie angepasst wird. Besonders bevorzugt kann eine Anpassung erfolgen an den Abstand zweier Dekorbereiche insbesondere unterschiedlicher Träger. Somit wird die Folie insbesondere in Längsrichtung nur an den Positionen strukturiert, welche bei einem Zusammenführen von Träger und Folie auf einem Dekorbereich positioniert werden.

Diese Ausgestaltung und erlaubt es durch eine klare Abgrenzung zwischen Strukturbereichen und Neutralbereichen die Positionierung der Folie auf dem Träger derart zu verbessern und zu vereinfachen, dass die Synchronität zwischen dem Dekor und der Struktur weiter verbessert werden kann. Die Gefahr für Fehlpositionierungen der Folie auf dem Träger und dadurch der Struktur auf dem Dekor kann so weiter reduziert werden.

Beispielsweise kann der Neutralbereich zumindest teilweise eine von dem strukturprägenden Bereich verschiedene Struktur aufweisen. In dieser Ausgestaltung kann die verschiedene Struktur beispielsweise durch eine definierte Struktur eine kamerabasierte Erkennung erleichtern.

Alternativ kann der Neutralbereich zumindest teilweise einen strukturfreien Bereich umfassen. Auch dieser lässt sich etwa kamerabasiert gut von dem strukturgeprägten Bereich unterscheiden.

Der Abstand zwischen zwei Dekorbereichen unterschiedlicher Träger kann beispielsweise den Plattenabstand in einer Kaschieranlage bedeuten, also den Abstand zweier Träger zueinander, oder auch einen größeren Abstand, etwa wenn Randfugen nicht mit einer Struktur versehen werden sollen.

Entsprechend kann es bevorzugt sein, dass die Folie in Längsrichtung auf eine Mehrzahl an Trägern aufgebracht wird, wobei die Träger jeweils eine zu strukturierende Oberfläche aufweisen, wobei die zu strukturierenden Oberflächen unterschiedlicher Träger voneinander beabstandet sind, und wobei der Abstand zwischen den zu strukturierenden Oberflächen zueinander der Länge eines Neutralbereichs entspricht.

Dabei sollte bevorzugt durch Beibehaltung der Verfahrensparameter beispielsweise zumindest für die Strukturierung einer Foliencharge, etwa einer Folienrolle, bestmöglich sichergestellt werden, dass Strukturbereiche und Freibereiche immer das gleiche Längenmaß aufweisen und ferner dass auch das Maß stets gleich bleibt. Dadurch kann verhindert werden, dass sich das Verhältnis von Dekor zu Strukturbereichen verändert und somit sich die Synchronität von Dekor und Struktur verschlechtert. Erreicht werden kann dies beispielsweise durch stabile Temperatur- und Zugsteuerung in der Prägeanlage.

Weiter bevorzugt kann auf das Dekor und auf die Folie eine Passermarkierung aufgebracht werden. Unter einer Passermarkierung kann eine Markierung verstanden werden, welche anzeigt, ob die Folie in der gewünschten und geplanten Position auf dem Träger positioniert ist. Wenn die Passermarkierungen beispielsweise unmittelbar übereinander positioniert sind oder in einem vordefinierten Verhältnis zueinander, kann sichergestellt sein, dass die Folie korrekt positioniert ist und dadurch hohe Anforderungen an Synchronität zwischen Dekor und Struktur eingehalten werden können.

Weiter bevorzugt kann als Träger ein kunststoffhaltiger Träger verwendet werden. Besonders bevorzugt kann der Träger einen Werkstoff umfassend einen Kunststoff und gegebenenfalls weitere Bestandteile aufweisen. Kunststoffe, welche bei der Herstellung entsprechender Paneele beziehungsweise der Träger eingesetzt werden können, sind beispielsweise thermoplastische Kunststoffe, wie Polyvinylchlorid, Polyolefine (beispielsweise Polyethylen (PE), Polypropylen (PP), Polyamide (PA), Polyurethane (PU), Polystyrol (PS), AcrylnitrilButadien-Styrol (ABS), Polymethylmethacrylat (PMMA), Polycarbonat (PC), Polyethylenterephthalat (PET), Polyetheretherketon (PEEK) oder Mischungen oder CoPolymerisate dieser. Die Kunststoffe können übliche Füllstoffe enthalten, beispielsweise Kalziumcarbonat (Kreide), Aluminiumoxid, Kieselgel, Quarzmehl, Holzmehl, Gips. Auch können sie in bekannter Weise eingefärbt sein. Bevorzugt kann der Träger Talkum als Füllmaterial aufweisen, etwa in einer Menge, bezogen auf das Gesamtmaterial des Trägers, von ≥ 30 Gew.-% bis ≤ 70 Gew.-%, insbesondere von ≥ 40 Gew.-% bis ≤ 60 Gew. Darüber hinaus kann es vorgesehen sein, dass der Träger multilaminar aufgebaut ist, also aus einer Vielzahl an Folien. Dabei können die Folien zu der aufzukaschierenden Folie gleich oder verschieden sein.

Derartige Kunststoffträger sind insbesondere bei Dekorpaneelen für viele Anwendungen bevorzugt und lassen sich ferner problemlos mit einer Folie versehen, so dass das Verfahren insbesondere in dieser Ausgestaltung problemlos durchführbar ist.

Es kann weiterhin bevorzugt sein, dass Verfahrensparameter und Maßänderungsdaten einer Folie, also Daten hinsichtlich einer Maßänderung der Folie während einer Strukturierung, gespeichert werden und mit Verfahrensparametern und Maßänderungsdaten der Folie oder einer anderen Folie während einer Strukturierung zu einem späteren Zeitpunkt verglichen werden. In dieser Ausgestaltung kann somit eine Logikprüfung erfolgen, da eine zumindest grobe Vorhersage möglich ist, in welchem Bereich eine Maßänderung sinnvoll oder zu erwarten ist. Dadurch können beispielsweise Fehlmessungen reduziert oder Fehler in der Strukturierung erkannt werden. Die gespeicherten und verglichenen Daten können beispielsweise die Maßänderung als solche umfassen und die Verfahrensparameter etwa den Pressdruck, die Presstemperatur, das Material der Folie und/oder die Dicke der Folie.

Das Verfahren zum Herstellen eines Dekorpaneels umfasst bevorzugt den weiteren Verfahrensschritt:
i) Einbringen von Verriegelungsmitteln an Kanten des Trägers.

Zur Ausbildung eines Dekorpaneels werden Verriegelungsmittel an Kanten des Trägers, beispielsweise umlaufend, vorgesehen. Dies kann beispielsweise durch eine spanende Bearbeitung der Trägerkanten realisierbar sein, wie es aus dem Stand der Technik grundsätzlich bekannt ist. Dadurch kann aus einer Vielzahl an Paneelen in ebenfalls bekannter Weise ein stabiler Verbund als Fußbodenbelag oder Deckenbelag oder Wandbelag geschaffen werden.

Hinsichtlich weiterer technischer Merkmale und Vorteile des Verfahrens wird auf die Beschreibung des Systems, die Figuren und die Beschreibung der Figuren verwiesen.

Beschrieben wird ferner ein System zum Herstellen eines Dekorpanels, aufweisend:
- ein Prägemittel zum Strukturieren einer zu strukturierenden Folie unter Ausbildung wenigstens eines Strukturbereichs auf der Folie;
- ein Bemaßungsmittel zum Ermitteln wenigstens eines Maßes wenigstens eines Strukturbereichs nach dem Prägen der Folie;
- ein Dekorierungsmittel zum Aufbringen eines Dekors auf einen Träger, wobei bei dem Aufbringen des Dekors auf den Träger das wenigstens eine Maß des Strukturbereichs berücksichtigbar ist; und
- eine Zusammenführung zum Aufbringen der strukturierten Folie auf den dekorierten Träger derart, dass der wenigstens eine Strukturbereich in Synchronität mit dem Dekor vorliegt.

Das hier beschriebene System dient insbesondere dazu, ein Verfahren durchzuführen, wie dies vorstehend im Detail beschrieben ist.

Hierzu umfasst das System ein Prägemittel zum Strukturieren einer zu strukturierenden Folie unter Ausbildung wenigstens eines Strukturbereichs auf der Folie. Das Prägemittel kann wie vorstehend beschrieben ausgestaltet sein und etwa eine Prägewalze oder ein Prägeband oder ein Prägeblech beziehungsweise Pressblech umfassen.

Ferner umfasst das System ein Bemaßungsmittel zum Ermitteln wenigstens eines Maßes wenigstens eines Strukturbereichs nach dem Prägen der Folie. Das Bemaßungsmittel ist zweckmäßigerweise hinsichtlich der Verfahrrichtung der Folie stromabwärts des Prägemittels angeordnet. Beispielsweise umfasst das Bemaßungsmittel eine Kamera oder einen Scanner, welcher die strukturierte Folie optisch abtastet und so die Größe des strukturierten Bereichs ermittelt. Das Bemaßungsmittel kann etwa ein analoges oder digitales Bemaßungsmittel sein. Das weiterhin umfasste Dekorierungsmittel zum Aufbringen eines Dekors auf den Träger kann insbesondere eine Direktdruckvorrichtung, wie insbesondere ein Digitaldrucker, sein. Die Steuerung des Digitaldruckers kann beispielsweise durch eine Datenverbindung mit dem Bemaßungsmittel oder einer Steuereinheit desselben verbunden sein. Dadurch kann ein konkretes Maß des strukturierten Bereichs der Folie beim Aufbringen des Dekors berücksichtigt werden. Alternativ kann das Maß des strukturierten Bereichs etwa händisch in das Dekorierungsmittel eingegeben werden.

Schließlich ist eine Zusammenführung zum Aufbringen der Folie auf den Träger derart umfasst, dass der wenigstens eine Strukturbereich in Synchronität mit dem Dekor vorliegt. Die Zusammenführung kann beispielsweise als Kaschieranlage ausgestaltet sein und durch eine entsprechende Steuerung sicherstellen, dass der Träger und die Folie und damit das Dekor und die Struktur synchron aufeinander gelegt werden.

Durch ein derartiges System kann insbesondere die Synchronität eines Dekors mit einer Struktur verbessert werden und dadurch ein Dekorpaneel mit einer besonders hohen Qualität ermöglicht werden.

Hinsichtlich weiterer technischer Merkmale und Vorteile des Verfahrens wird auf die Beschreibung des Systems, die Figuren und die Beschreibung der Figuren verwiesen.

Nachfolgend wird die Erfindung unter Bezugnahme auf die anliegenden Zeichnungen exemplarisch erläutert, wobei die nachfolgend dargestellten Merkmale sowohl jeweils einzeln als auch in Kombination einen Aspekt der Erfindung darstellen können, und wobei die Erfindung nicht auf die folgende Zeichnung, die folgende Beschreibung und das folgende Ausführungsbeispiel beschränkt ist.
Fig. 1 zeigt schematisch ein System zum Herstellen eines Dekorpaneels;
Fig. 2 zeigt eine Prägewalze für ein System nach Fig. 1;
Fig. 3 zeigt eine mit der Prägewalze aus Fig. 2 strukturierte Folie in einer ersten Ausgestaltung; und
Fig. 4 zeigt eine mit der Prägewalze aus Fig. 2 strukturierte Folie in einer weiteren Ausgestaltung

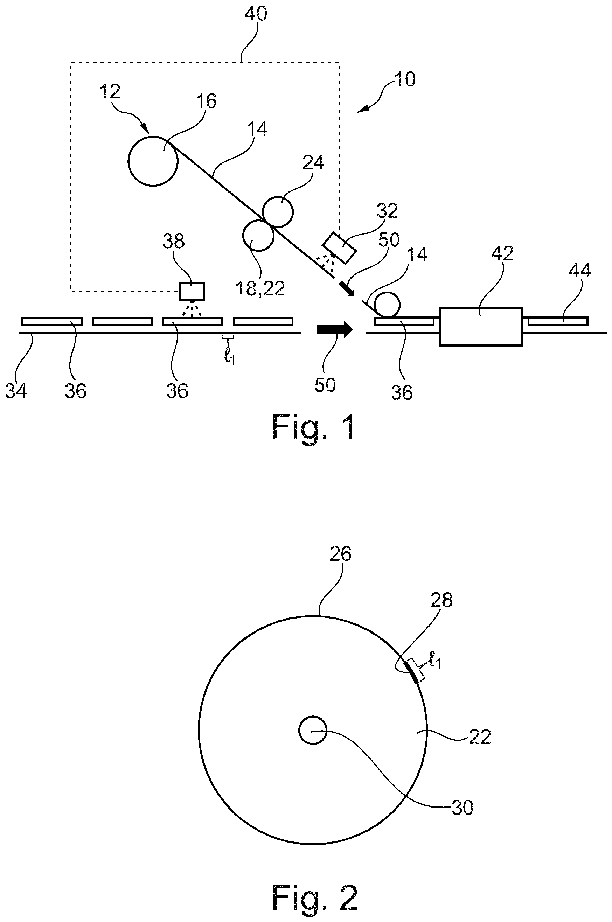

In der Figur 1 ist ein System 10 zum Herstellen eines Dekorpanels gezeigt. Das System 10 umfasst eine Zuführeinheit 12 für eine zu strukturierende Folie 14. Durch die Zuführeinheit 12, die gemäß Figur 1 eine Rolle 16 mit aufgerollter Folie 14 ist, kann die Folie 14 einem Prägemittel 18 zum Strukturieren der Folie 14 unter Ausbildung wenigstens eines Strukturbereichs 20 auf der Folie 14 zugeführt werden. Das Prägemittel 18 ist gemäß Figur 1 eine Prägewalze beziehungsweise ein Prägezylinder 22, der die Folie 14 strukturieren kann, indem die Folie 14 einen durch den Prägezylinder 22 und eine Gegenwalze 24 begrenzten Spalt durchläuft.

Der um eine Achse 30 rotierbare Prägezylinder 22 ist beispielhaft in der Figur 2 gezeigt. Dabei ist zu erkennen, dass der Prägezylinder 22 an seinem Außenumfang einen strukturprägenden Bereich 26 und einen Neutralbereich 28 aufweist, der eine Länge l₁ aufweist. In den strukturprägenden Bereich 26 ist etwa eine Struktur eingraviert, welche aus Dekordaten digital extragiert wurde und das Negativ der in die Folie 14 einzubringenden Struktur sein kann. Der Neutralbereich 28 kann insbesondere frei von einer Struktur sein und eine glatte Oberfläche aufweisen, oder eine zu dem strukturprägenden Bereich 26 verschiedene Struktur aufweisen.

Zurückkommend auf Figur 1 ist weiterhin ein Bemaßungsmittel 32 zum Ermitteln wenigstens eines Maßes wenigstens eines Strukturbereichs 20 nach dem Prägen der Folie 14 gezeigt. Ausweislich der Figur 1 ist das Bemaßungsmittel 32 insbesondere eine optisches Bemaßungsmittel 32, wie etwa eine Kamera, welche die strukturierte Folie 14 optisch abtastest und so das gewünschte Maß, wie insbesondere die Länge oder die Breite, des Strukturbereichs 20 detektiert. Grundsätzlich kann jedoch auch ein analoges Bemaßungsmittel Verwendung finden und/oder kann eine Bemaßung unter Verwendung einer Passermarkierung 48 stattfinden.

Es ist ferner eine Zuführeinrichtung 34 für eine Mehrzahl an plattenförmigen Trägern 36 gezeigt, wobei die Zuführeinrichtung 34 als Förderband ausgestaltet ist. Die Zuführeinrichtung 34 führt die Träger 36 zu einem Dekorierungsmittel 38, das dem Aufbringen eines Dekors auf die Träger 36 dient. In der Figur 1 ist das Dekorierungsmittel 38 als Digitaldrucker ausgestaltet, der eine geeignete Anzahl an Druckköpfen aufweisen kann. Dabei ist das Dekorierungsmittel 38, etwa eine Steuereinheit desselben, mit dem Bemaßungsmittel 32 durch eine beispielsweise drahtlose Datenverbindung 40 verbunden etwa für den Fall, dass das Bemaßungsmittel 32 digital arbeitet. Dadurch kann es möglich werden, dass bei dem Aufbringen des Dekors auf den Träger 36 das wenigstens eine Maß des Strukturbereichs 20 berücksichtigbar ist. Durch die einfache Anpassungsmöglichkeit der Digitaldruckdatei kann der Druck auf die Struktur in der Synchronität feinjustiert werden.

Schließlich laufen die Folie 14 und die Träger 36 zu einer Zusammenführung 42 zum Aufbringen der Folie 14 auf den Träger 36 derart, dass der wenigstens eine Strukturbereich 20 in Synchronität mit dem Dekor vorliegt. Die Zusammenführung 42, die in Figur 1 nur rein schematisch gezeigt ist, kann insbesondere als Kaschieranlage ausgestaltet sein. Nach der Zusammenführung 42 beziehungsweise der Kaschieranlage kann ein Dekorpaneel 44 erzeugt sein, bei dem Träger 36 mit einem Dekor und einer strukturierten Folie 14 versehen ist, wobei die strukturierte Folie 14 synchron zu dem Dekor ist.

Entsprechend ist durch das in Figur 1 gezeigt System 10 ein Verfahren zum Herstellen eines strukturierten Dekorpaneels 44 ausführbar, aufweisend die Verfahrensschritte:
a) Bereitstellen einer zu strukturierenden Folie 14;
b) Bereitstellen eines Prägemittels 18 zum Strukturieren der Folie 14;
c) Strukturieren der Folie 14 mit dem Prägemittel 18 unter Ausbildung wenigstens eines Strukturbereichs 20 auf der Folie 14;
d) Ermitteln wenigstens eines Maßes wenigstens eines Strukturbereichs 20 nach Verfahrensschritt c);
e) Bereitstellen eines Trägers 36,
f) Aufbringen eines Dekors auf den Träger 36, wobei
g) bei dem Aufbringen eines Dekors auf den Träger 36 das in Verfahrensschritt c) ermittelte wenigstens eine Maß des Strukturbereichs 20 berücksichtigt wird; und
h) Aufbringen der strukturierten Folie 14 auf den dekorierten Träger 36 derart, dass der wenigstens eine Strukturbereich 20 in Synchronität mit dem Dekor vorliegt.

Grundsätzlich kann das System 10 als zusammenhängendes System 10 ausgestaltet sein, in dem die Schritte zusammenhängend ausgeführt werden. In diesem Fall laufen die Prozesse an den Positionen der Pfeile 50 ohne Unterbrechung weiter. Es ist jedoch ebenfalls möglich, die einzelnen Prozessstränge zu unterbrechen und so etwa vor oder, wie in Figur 1 durch den Pfeil 50 gezeigt, nach dem Bemaßungsmittel 32 die strukturierte Folie 14 zunächst zu lagern. Entsprechend kann der bedruckte Träger 16, wie dies ebenfalls durch den Pfeil 50 dargestellt sein soll, vor dem Durchlaufen der Zusammenführung 42 beziehungsweise der Kaschieranlage gelagert werden. Entsprechend kann die strukturierte Folie 14 bei Bedarf auf den bedruckten Träger 36 kaschiert werden.

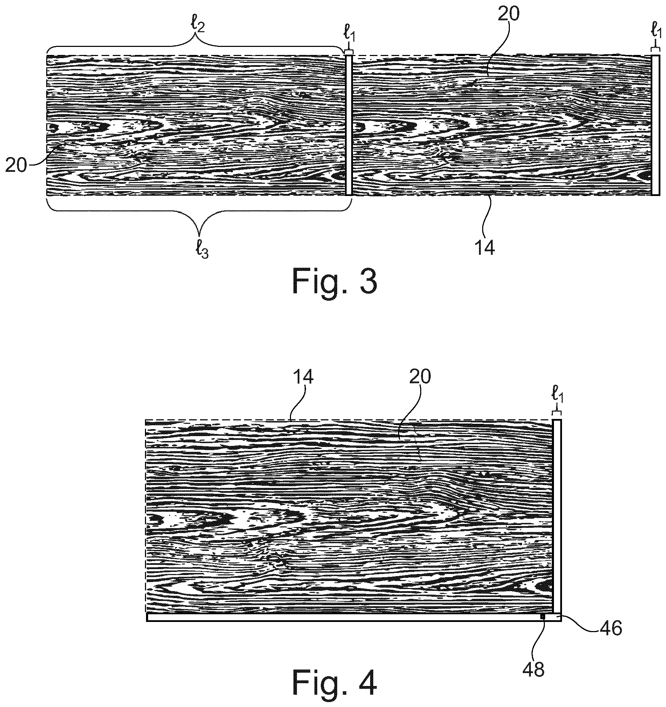

Figur 3 zeigt eine Folie 14 mit zwei Strukturbereichen 20, die durch einen Prägezylinder 22 gemäß Figur 2 erzeugt wurden. Dabei ist zu erkennen, dass ein Abstand zwischen zwei Strukturbereichen 20 entlang der Länge der Folie 14 der Länge l₁ des Neutralbereichs 28 des Prägezylinders 22 als auch dem in Figur 1 gezeigten Abstand zweier Träger 36 entspricht. Die Länge l₂ entspricht der Länge des Strukturbereichs 20 und die Länge l₃ einer vollständigen Zylinderabwicklung des Prägezylinders 22. Beispielsweise ist die Länge h, also die Länge des Strukturbereichs 20, ein Maß, welches beim Erzeugen des Dekors beachtet wird. Rein beispielhaft und in keiner Weise beschränkend kann der Neutralbereich 28 beziehungsweise der Abstand zweier Strukturbereiche 20 eine Länge l₁ von beispielsweis 25mm aufweisen und kann der strukturprägende Bereich 26 beziehungsweise der Strukturbereich 20 eine Länge h von 1300 mm aufweisen.

In der Figur 4 ist eine weitere Ausgestaltung einer strukturierten Folie 14 mit einem Strukturbereich 20 gezeigt. Gemäß Figur 4 ist ein seitlicher Randbereich 46 vorgesehen, der sich entlang der Länge der Folie 14 erstreckt. In diesem Randbereich 46 kann eine Passermarkierung 48, wie etwa ein Passerkreuz, vorgesehen sein, welche das Zusammenführen von Träger 36 und Folie 14 verbessern kann. Der Randbereich 46 kann nach Aufbringen der Folie 14 auf den Träger 36 entfernt werden, was für eine vollständige Abdeckung des Trägers 16 von Vorteil sein kann.

### Bezugszeichenliste

- 10: System
- 12: Zuführeinheit
- 14: Folie
- 16: Rolle
- 18: Prägemittel
- 20: Strukturbereich
- 22: Prägezylinder
- 24: Gegenwalze
- 26: strukturprägender Bereich
- 28: Neutralbereich
- 30: Achse
- 32: Bemaßungsmittel
- 34: Zuführeinrichtung
- 36: Träger
- 38: Dekorierungsmittel
- 40: Datenverbindung
- 42: Zusammenführung
- 44: Dekorpaneel
- 46: Randbereich
- 48: Passermarkierung
- 50: Pfeil

## Patentansprüche

1. Verfahren zum Herstellen eines strukturierten Dekorpaneels (44), aufweisend die Verfahrensschritte:
a) Bereitstellen einer zu strukturierenden Folie (14);
b) Bereitstellen eines Prägemittels (18) zum Strukturieren der Folie (14);
c) Strukturieren der Folie (14) mit dem Prägemittel (18) unter Ausbildung wenigstens eines Strukturbereichs (20) auf der Folie (14);
d) Ermitteln wenigstens eines Maßes wenigstens eines Strukturbereichs (20) nach Verfahrensschritt c);
e) Bereitstellen eines Trägers (36),
f) Aufbringen eines Dekors auf den Träger (36), wobei
g) bei dem Aufbringen eines Dekors auf den Träger (36) das in Verfahrensschritt c) ermittelte wenigstens eine Maß des Strukturbereichs (20) berücksichtigt wird; und
h) Aufbringen der strukturierten Folie (14) auf den dekorierten Träger (36) derart, dass der wenigstens eine Strukturbereich (20) in Synchronität mit dem Dekor vorliegt.

2. Verfahren nach Anspruch 1, wobei das wenigstens eine Maß die Länge des Strukturbereichs (20) umfasst.

3. Verfahren nach Anspruch 1 oder 2, wobei das wenigstens eine Maß die Breite des Strukturbereichs (20) umfasst.

4. Verfahren nach einem der vorherigen Ansprüche, wobei die Folie (14) eine Acrylat-basierte Kunststoffzusammensetzung, insbesondere eine polyurethanmodifizierte Acrylat-Kunststoffzusammensetzung, Polypropylen oder Polyethylenterephtalat aufweist.

5. Verfahren nach einem der vorherigen Ansprüche, wobei Verfahrensschritt f) unter Verwendung eines Digitaldruckverfahrens erfolgt.

6. Verfahren nach einem der vorherigen Ansprüche, wobei als Prägemittel (18) wenigstens eines von einem Prägezylinder (22), einem Prägeband und einem Prägeblech verwendet wird.

7. Verfahren nach einem der vorherigen Ansprüche, wobei Verfahrensschritt g) erfolgt, indem bestehende und entsprechenden Maßen zugeordnete Dekordaten verwendet werden oder indem basierend auf dem Maß eine rechnerische Korrektur von Dekordaten erfolgt.

8. Verfahren nach einem der vorherigen Ansprüche, wobei das Prägemittel (18) in Längsrichtung benachbart zu wenigstens einem strukturprägenden Bereich (26) einen Neutralbereich (28) aufweist.

9. Verfahren nach Anspruch 8, wobei der Neutralbereich (28) zumindest teilweise eine von dem strukturprägenden Bereich (26) verschiedene Struktur aufweist.

10. Verfahren nach Anspruch 8 oder 9, wobei der Neutralbereich (28) zumindest teilweise einen strukturfreien Bereich umfasst.

11. Verfahren nach einem der Ansprüche 8 bis 10, wobei die Folie (14) in Längsrichtung auf eine Mehrzahl an Trägern (36) aufgebracht wird, wobei die Träger (36) jeweils eine zu strukturierende Oberfläche aufweisen, wobei die zu strukturierenden Oberflächen unterschiedlicher Träger (36) voneinander beabstandet sind, und wobei der Abstand zwischen den zu strukturierenden Oberflächen zueinander der Länge l₁ eines Neutralbereichs (28) entspricht.

12. Verfahren nach einem der vorherigen Ansprüche, wobei auf das Dekor und auf die Folie (14) eine Passermarkierung (48) aufgebracht wird.

13. Verfahren nach einem der vorherigen Ansprüche, wobei als Träger (36) ein kunststoffhaltiger Träger (36) verwendet wird.

14. Verfahren nach einem der vorherigen Ansprüche, wobei Verfahrensparameter und Maßänderungsdaten einer Folie (14) gespeichert werden und mit Verfahrensparametern und Maßänderungsdaten der Folie (14) oder einer anderen Folie (14) während einer Strukturierung zu einem späteren Zeitpunkt verglichen werden.

15. System (10) zum Herstellen eines Dekorpanels (44), aufweisend:
- ein Prägemittel (18) zum Strukturieren einer zu strukturierenden Folie (14) unter Ausbildung wenigstens eines Strukturbereichs (20) auf der Folie (14);
- ein Bemaßungsmittel (32) zum Ermitteln wenigstens eines Maßes wenigstens eines Strukturbereichs (20) nach dem Prägen der Folie (14);
- ein Dekorierungsmittel (38) zum Aufbringen eines Dekors auf einen Träger (36), wobei bei dem Aufbringen des Dekors auf den Träger (36) das wenigstens eine Maß des Strukturbereichs (20) berücksichtigbar ist; und
- eine Zusammenführung (42) zum Aufbringen der strukturierten Folie (14) auf den dekorierten Träger (36) derart, dass der wenigstens eine Strukturbereich (20) in Synchronität mit dem Dekor vorliegt.

## Claims

1. A method for manufacturing a structured decor panel (44), including the steps of:
a) providing a film (14) to be structured;
b) providing an embossing means (18) for structuring the film (14);
c) structuring the film (14) with the embossing means (18) while forming at least one structure area (20) on the film (14);
d) determining at least one dimension of at least one structure area (20) after step c);
e) providing a carrier (36);
f) applying a decor to the carrier (36), wherein,
g) when applying the decor to the carrier (36), the at least one dimension of the structure area (20) determined in step c) is taken into account; and
h) applying the structured film (14) to the decorated carrier (36) such that the at least one structure area (20) is present in synchronicity with the decor.

2. The method according to claim 1, wherein the at least one dimension includes the length of the structure area (20).

3. The method according to claim 1 or 2, wherein the at least one dimension includes the width of the structure area (20).

4. The method according to any of the previous claims, wherein the film (14) includes an acrylic-based plastic compound, in particular a polyurethane-modified acrylic plastic compound, polypropylene, or polyethylene terephthalate.

5. The method according to any of the previous claims, wherein step f) is performed using a digital printing process.

6. The method according to any of the previous claims, wherein at least one of an embossing cylinder (22), an embossing band, and a metal embossing sheet is used as the embossing means (18).

7. The method according to any of the previous claims, wherein step g) is performed by using existing decor data associated with corresponding dimensions, or by performing a computational correction of decor data based on the dimension.

8. The method according to any of the previous claims, wherein the embossing means (18) has a neutral area (28) adjacent to at least one structure-embossing area (26) in the longitudinal direction.

9. The method according to claim 8, wherein the neutral area (28) at least partially has a structure different from the structure-embossing area (26).

10. The method according to claim 8 or 9, wherein the neutral area (28) at least partially comprises a structure-free area.

11. The method according to any of claims 8 to 10, wherein the film (14) is applied in the longitudinal direction to a plurality of carriers (36), each carrier (36) comprising a surface to be structured, the surfaces to be structured of different carriers (36) being spaced apart, and the distance between the surfaces to be structured corresponding to the length l₁ of a neutral area (28).

12. The method according to any of the previous claims, wherein a registration mark (48) is applied to the decor and the film (14).

13. The method according to any of the previous claims, wherein a plastic-containing carrier (36) is used as the carrier (36).

14. The method according to any of the previous claims, wherein process parameters and dimensional change data of a film (14) are stored and are compared to process parameters and dimensional change data of the film (14) or another film (14) during a structuring at a later point in time.

15. A system (10) for manufacturing a decor panel (44), including:
- an embossing means (18) for structuring a film (14) to be structured while forming at least one structure area (20) on the film (14);
- a dimensioning means (32) for determining at least one dimension of at least one structure area (20) after the embossing of the film (14);
- a decoration means (38) for applying a decor to a carrier (36), wherein the at least one dimension of the structure area (20) is able to be taken into account when applying the decor to the carrier (36); and
- a merging device (42) for applying the structured film (14) to the decorated carrier (36) such that the at least one structure area (20) is present in synchronicity with the decor.

## Revendications

1. Procédé de fabrication d'un panneau décoratif structuré (44), comprenant les étapes du procédé suivantes :
a) fournir un film (14) à structurer;
b) fournir un moyen de gaufrage (18) pour structurer le film (14);
c) structurer le film (14) avec les moyens de gaufrage (18) tout en formant au moins une zone de structure (20) sur la feuille (14);
d) déterminer au moins une dimension d'au moins une zone de structure (20) selon l'étape c) du procédé;
e) fournir un support (36),
f) appliquer un décor sur le support (36), dans lequel
g) lors de l'application d'un décor sur le support (36), à l'étape c) du procédé au moins une dimension de la zone de structure (20) est prise en compte; et
h) appliquer le film à structurer (14) sur le support décoré (36) de telle sorte qu'au moins une zone de structure (20) est synchronisée avec le décor.

2. Procédé selon la revendication 1, dans lequel au moins une dimension comprend la longueur de la zone de structure (20).

3. Procédé selon la revendication 1 ou 2, dans lequel au moins une dimension comprend la largeur de la zone de structure (20).

4. Procédé selon l'une quelconque des revendications précédentes, dans lequel le film (14) comprend une composition de matière plastique à base d'acrylate, en particulier une composition de matière plastique d'acrylate modifiée par du polyuréthane, du polypropylène ou du polyéthylène téréphtalate.

5. Procédé selon l'une des revendications précédentes, dans lequel l'étape (f) du procédé est réalisée à l'aide d'un procédé d'impression numérique.

6. Procédé selon l'une quelconque des revendications précédentes, dans lequel au moins l'un parmi un cylindre de gaufrage (22), un ruban de gaufrage et une plaque de gaufrage est utilisé comme moyen de gaufrage (18).

7. Procédé selon l'une des revendications précédentes, dans lequel l'étape (g) du procédé est réalisée en utilisant les données de décor existantes attribuées aux dimensions correspondantes ou en effectuant une correction informatique des données de décor sur la base des dimensions.

8. Procédé selon l'une quelconque des revendications précédentes, dans lequel le moyen de gaufrage (18) présente une zone neutre (28) adjacente à au moins une zone de gaufrage de structure (26) dans la direction longitudinale

9. Procédé selon la revendication 8, dans lequel la zone neutre (28) comporte au moins partiellement une structure différente de la zone de gaufrage de structure (26).

10. Procédé selon la revendication 8 ou 9, dans lequel la zone neutre (28) comprend au moins partiellement une zone sans structure.

11. Procédé selon l'une quelconque des revendications 8 à 10, dans lequel le film (14) est appliquée dans la direction longitudinale sur une pluralité de supports (36), dans lequel les supports (36) ont chacun une surface à structurer, dans lequel les surfaces à structurer de différents supports (36) sont espacées les unes des autres, et dans lequel la distance entre les surfaces à structurer correspondant à la longueur l₁ d'une zone neutre (28).

12. Procédé selon l'une quelconque des revendications précédentes, dans lequel une marque d'enregistrement (48) est apposée sur le décor et le film (14).

13. Procédé selon l'une des revendications précédentes, dans lequel un support (36) contenant du plastique est utilisé comme support (36).

14. Procédé selon l'une des revendications précédentes, dans lequel les paramètres de procédé et les données de changement dimensionnel d'un film (14) sont stockés et comparés aux paramètres de procédé et aux données de changement dimensionnel du film (14) ou d'un autre film (14) au cours d'une structuration à un moment ultérieur dans le temps.

15. Système (10) de fabrication d'un panneau décoratif (44), comprenant :
- un moyen de gaufrage (18) pour structurer un film (14) à structurer tout en formant au moins une zone de structure (20) sur le film (14);
- un moyen de dimensionnement (32) pour déterminer au moins une dimension d'au moins une zone de structure (20) après gaufrage du film (14);
- un moyen de décoration (38) pour appliquer un décor sur un support (36), dans lequel, lors de l'application du décor sur le support (36), au moins une dimension de la zonede structure (20) peut être prise en compte; et
- un dispositif de fusion (42) pour appliquer le film structuré (14) sur le support (36) de telle sorte qu'au moins une zone de structure (20) soit synchronisée avec le décor.
